# EUROPÄISCHE PATENTSCHRIFT

(11) **EP 4 341 744 B1**
(45) Veröffentlichungstag und Bekanntmachung des Hinweises auf die Patenterteilung: **19.11.2025**
(21) Anmeldenummer: 22726063.5
(22) Anmeldetag: 27.04.2022
(51) Int. Cl.: H04N 13/305, B60K 35/10, B60K 35/21, B60K 35/22, B60K 35/235, G02B 27/28, G02F 1/1347

(54) **VERFAHREN ZUM BETREIBEN EINES 3D-DISPLAYS UND 3D-DISPLAY-ANORDNUNG**
METHOD OF OPERATING A 3D DISPLAY AND 3D DISPLAY ARRANGEMENT
PROCEDE DE FONCTIONNEMENT D'UN AFFICHAGE 3D ET DISPOSITION D'AFFICHAGE 3D

(30) Priorität: 20.05.2021 DE 102021205197
(43) Veröffentlichungstag der Anmeldung: 27.03.2024
(73) Patentinhaber: VOLKSWAGEN AKTIENGESELLSCHAFT, 38440 Wolfsburg (DE)
(72) Erfinder: SCHRÖDER, Heiko, 38536 Meinersen (DE); DANOV, Roman, 30171 Hannover (DE)
(86) Internationale Anmeldenummer: PCT/EP2022/061245
(87) Internationale Veröffentlichungsnummer: WO 2022/242998

(56) Entgegenhaltungen:
- EP-A1- 2 802 148
- US-A1- 2014 028 933

## Beschreibung

Die Erfindung betrifft ein Verfahren zum Betreiben eines 3D-Displays, wobei mittels eines LC-Panels Sichtstrahlen erzeugt werden, wobei die Sichtstrahlen von mindestens einer LC-Optik umgelenkt werden können.

Daneben betrifft die Erfindung eine 3D-Display-Anordnung mit einem LC-Panel, mit einer ersten LC-Optik, mit einer zweiten LC-Optik und mit einer Blickerfassungseinrichtung.

Bei der Entwicklung von 3D-Displays besteht das Problem, dass die Auflösung des Displays stark reduziert wird, sobald eine 3D-Ansicht erzeugt werden soll. Die Ursache dafür liegt in der Notwendigkeit, unterschiedliche Ansichten für eine 3D-Anzeige generieren zu müssen. Bei stereoskopischen Displays sind nur zwei Ansichten erforderlich, dabei wird allerdings der Bereich reduziert, in dem ein 3D-Sehen möglich ist. Bei Lichtfeld-Displays hingegen werden für viele unterschiedliche Sichtbereiche Ansichten beziehungsweise Sichtstrahlen erzeugt. Auf diese Weise wird der 3D-Eindruck signifikant verbessert. Generell gilt: Je mehr Ansichten von einem 3D-Display für den gleichen Sichtbereich erzeugt werden, desto besser wird der 3D-Eindruck.

Bei 3D-Displays werden typischerweise statische, optische Elemente benutzt, um für einzelne Pixel des Displays den Sichtbereich auf einen kleinen Winkelbereich einzuschränken. Diese Einschränkung ermöglicht es, unterschiedliche Inhalte für das rechte und das linke Auge des Betrachters anzuzeigen. Diese optischen Elemente sind entweder so genannte Barriers, Lenticulare/Microlinsen und/oder Waveguides mit Auskoppelstrukturen. Des Weiteren werden für Barriers auch 1D-LC-Displays verwendet. Diese können dynamisch geschaltet werden, wodurch der Barrier mit Hilfe einer Eye-Tracking-Kamera derart anpassbar ist, dass jedes Auge eines Betrachters ein separates Bild sieht. Damit kann der Bereich, in dem ein 3D-Sehen möglich ist, vergrößert und gleichzeitig die Anzahl der nötigen unterschiedlichen Sichtbereiche reduziert werden.

Die Lösungen, die feste optische Komponenten verwenden, benötigen deutlich höhere Auflösungen, da deutlich mehr Ansichten generiert werden müssen, um in einem größeren Sichtbereich das 3D-Sehen zu ermöglichen. Die Variante mit einem aktiven Barrier für ein 3D-Display reduziert dieses Problem. Alle Lösungen haben aber immer zur Folge, dass der Tiefenbereich, in dem der Betrachter vor dem Display ein 3D-Sehen erleben kann, beschränkt ist.

Daneben sind im Stand der Technik Varianten von 3D-Displays bekannt, welche sich das Konzept der Holographie zunutze machen. Diese Systeme bedienen sich Laser-Lichtquellen und nutzen unter anderem Phasen-Displays. Die größte Herausforderung bei der Technologie stellt die Wellenlängenabhängigkeit dar. Dadurch sind diese Systeme sehr komplex.

Die US 2014/0028933 A1 offenbart ein 3D-Anzeigesystem, das eine Hintergrundbeleuchtungsplatte, eine Anzeigetafel, eine Lichtverteilungsvorrichtung und eine Polarisationszustandssteuerung umfasst. Die Anzeigetafel ist so konfiguriert, dass sie ein zweidimensionales (2D) Bild in einem 2D-Modus oder ein 3D-Bild in einem 3D-Modus anzeigt. Die Lichtteilungsvorrichtung ist so konfiguriert, dass sie das 2D-Bild im 2D-Modus durchlässt und das 3D-Bild in ein linkes Bild und ein rechtes Bild aufteilt. Ferner ist die Polarisationszustandssteuerung zwischen der Anzeigetafel und der Lichtteilungsvorrichtung angeordnet und so konfiguriert, dass sie eine Polarisationsrichtung des von der Anzeigetafel im 2D-Modus emittierten Lichts dreht.

Die EP 2 802 148 A1 offenbart ein Anzeigegerät, das eine Bilderzeugungsvorrichtung umfasst, die eine Folge von Bildern anzeigt. Die Sequenz umfasst Teilsequenzen, die temporär verschachtelt sind. Die Bilder sind aus einer Vielzahl von Pixeln zusammengesetzt. Jedes Pixel sendet einen Satz von Lichtstrahlen aus, die zumindest in horizontaler Richtung im Wesentlichen nicht divergent sind. Eine Strahlenlenkungsvorrichtung lenkt die Lichtstrahlen von den Pixeln zu verschiedenen Betrachtungspunkten.

Der Erfindung liegt nun daher die Aufgabe zugrunde, ein Verfahren zum Betreiben eines 3D-Displays sowie eine 3D-Display-Anordnung anzugeben, bei denen ein möglichst leichter Aufbau ermöglicht wird, wobei gleichzeitig eine hohe Auflösung einer dreidimensionalen Ansicht erzielt werden kann.

Diese Aufgabe ist bei der vorliegenden Erfindung durch die Merkmale des Kennzeichnungsteils des Patentanspruchs 1 zunächst dadurch gelöst, dass eine Blickerfassungseinrichtung die Position des linken Auges und des rechten Auges eines Betrachters des 3D-Displays verfolgt, dass der LC-Optik mindestens eine erste Abbildungsfunktion zugeordnet wird, durch die Sichtstrahlen in den Bereich des linken Auges gelenkt werden können, dass der LC-Optik mindestens eine zweite Abbildungsfunktion zugeordnet wird, durch die Sichtstrahlen in den Bereich des rechten Auges gelenkt werden können, und dass zwischen der ersten Abbildungsfunktion und der zweiten Abbildungsfunktion synchron zur Bildwiederholfrequenz des LC-Panels gewechselt wird.

Bei einem LC-Panel handelt es sich um eine Flüssigkristallanzeige oder einen Flüssigkristallbildschirm, dessen Funktion darauf beruht, dass Flüssigkristalle die Polarisationsrichtung von Licht beeinflussen, wenn ein bestimmtes Maß an elektrischer Spannung angelegt wird.

Unter Sichtstrahlen sind im vorliegenden Fall Ansichten zu verstehen, die bei der Erstellung von 3D-Ansichten genutzt werden, um eine dreidimensionale Wahrnehmung beim Betrachter zu erzeugen, indem unterschiedliche Ansichten eines Bildes in den Sichtbereich des Betrachters geleitet werden.

Flüssige Kristalle, im Weiteren LC (Liquid Crystals) genannt, sind in der Lage, abhängig von dem angelegten elektrischen Feld ihren Brechungsindex zu ändern. Dies erfolgt, indem LCs ihre Orientierung zur optischen Achse verändern, wenn die Intensität des elektrischen Feldes verändert wird. Beim Ausschalten des elektrischen Feldes orientieren sich die LCs in ihre ursprüngliche Position, in der der Lichtstrahl das Element (fast) ohne Brechung durchdringt. Dabei bestimmt die spannungslose Orientierung der LCs eine orientierungsvorgebende Schicht. Diese kann auf zwei Substrate, beispielsweise Glas, aufgetragen werden, zwischen denen sich die LCs befinden. Die Elektroden, die das elektrische Feld aufbauen, können ebenfalls auf dem Substratglas aufgetragen werden und sind nahezu transparent. Beim Anlegen der Spannung können, je nach Design der LC-Optik, eine Veränderung der Licht-Spot-Größe (Fokusänderung), eine symmetrische Spotausdehnung in einer oder zwei Achsen, eine Verschiebung des Lichtspots und/oder eine asymmetrische Verwischung des Lichtspots erreicht werden.

Die Blickerfassungseinrichtung ist derart ausgestaltet, dass eine Aufzeichnung und/oder eine Analyse von Blickbewegungen ermöglicht wird. Dabei kann es sich vorzugsweise um eine Eye-Tracking-Kamera handeln.

Unter einer Abbildungsfunktion ist die Einstellung der LC-Optik zu verstehen, also auch die entsprechende Intensität des elektrischen Feldes, die benötigt wird, um die jeweiligen Sichtstrahlen in die entsprechende horizontale Richtung der Augen des Betrachters zu lenken. Die Abbildungsfunktion ist entsprechend mit der Blickerfassungseinrichtung verknüpft, so dass die relevanten Sichtstrahlen zum Betrachter gelenkt werden können, wobei für den Fall irrelevante Ansichten außerhalb des Sichtbereichs des Anwenders nicht erzeugt werden müssen.

Ein Vorteil der vorliegenden Erfindung besteht darin, dass auf diese Weise ein flexibles und dynamisch anpassbares System geschaffen wird, welches durch softwaretechnische Ansteuerung eine Veränderung der Abbildungsfunktion ermöglicht. Dadurch, dass Licht gezielt zu den Augen gelenkt wird, ist die Systemeffizienz höher und es kann mit deutlich weniger Rays gearbeitet werden. Des Weiteren wird durch diese Reduktion auf die Augen die generelle Auflösung nicht merklich reduziert und die benötigte Rechenleistung deutlich verringert.

Es kann vorgesehen sein, dass eine Beleuchtung beziehungsweise Hintergrundbeleuchtung verwendet wird, die ein horizontal kollimiertes Licht ist und mit einer Linse im 3D-Display so fokussiert wird, dass nur ein Bereich von 8 mm bis 16 mm vor dem Display in einer Entfernung von 600 mm bis 1000 mm sichtbar wird. Die schaltbare LC-Optik sorgt dann für das "Verschieben" des Lichtes an die jeweilige aktuelle Position des Betrachterauges.

Weitere bevorzugte Ausgestaltungen der Erfindung ergeben sich aus den übrigen, in den Unteransprüchen genannten Merkmalen.

Erfindungsgemäß ist vorgesehen, dass mindestens eine erste LC-Optik und eine zweite LC-Optik vorgesehen sind und dass die erste Abbildungsfunktion der ersten LC-Optik zugeordnet wird und dass die zweite Abbildungsfunktion der zweiten LC-Optik zugeordnet wird.

Weiter ist erfindungsgemäß vorgesehen, dass die das LC-Panel verlassenen Sichtstrahlen einen ersten Polarisationszustand aufweisen, dass ein Polarisations-Switch vorgesehen ist, durch den die Sichtstrahlen vom ersten Polarisationszustand in einen zweiten Polarisationszustand und vom zweiten Polarisationszustand in den ersten Polarisationszustand überführt werden können. Der Polarisations-Switch ist in der Lage, die Polarisation der Sichtstrahlen um 180° zu drehen. Auf diese Weise kann zwischen der ersten Abbildungsfunktion und der zweiten Abbildungsfunktion synchron zur Bildwiederholfrequenz des LC-Panels gewechselt werden, indem der Polarisations-Switch indirekt die erste LC-Optik beziehungsweise die zweite LC-Optik ansteuert.

Ferner ist erfindungsgemäß vorgesehen, dass die erste LC-Optik für den ersten Polarisationszustand ausgelegt ist und dass die zweite LC-Optik für den zweiten Polarisationszustand ausgelegt ist. Die beiden unterschiedlichen LC-Optiken ermöglichen, zwei unterschiedliche Abbildungsfunktionen beziehungsweise optische Funktionen vorzuhalten, zwischen denen schnell durch den Polarisations-Switch gewechselt werden kann. Auf diese Weise können im Wechsel Sichtstrahlen im ersten Polarisationszustand, beispielsweise zum linken Auge des Betrachters, gerichtet werden, während Sichtstrahlen im zweiten Polarisationszustand zum rechten Auge des Betrachters gerichtet werden. Bei einer genügend hohen Bildwiederholfrequenz fällt dem Betrachter ein solcher Wechsel nicht auf und er erfährt ein dreidimensionales Sehen.

Bevorzugt ist bei einer weiteren Ausgestaltung des erfindungsgemäßen Verfahrens vorgesehen, dass der erste Polarisationszustand einer P-Polarisation entspricht und dass der zweite Polarisationszustand einer S-Polarisation entspricht. Der Polarisations-Switch kann zwischen der P-Polarisation und der S-Polarisation schalten.

Bei einer weiteren vorteilhaften Ausgestaltung des erfindungsgemäßen Verfahrens ist vorgesehen, dass das LC-Panel mit einer Bildwiederholfrequenz von 120 Hz betrieben wird. Für die tatsächliche Darstellung des 3D-Bildes wird bei einem Display eine Bildwiederholrate von 60 Hz gewünscht. Für jedes Auge wird eine Abbildungsoptik vorgehalten und der Polarisations-Switch schaltet mit 120 Hz zwischen diesen beiden Funktionen synchron mit den 120 Hz des LC-Panels, so dass letztlich eine 3D-Ansicht mit einer Bildwiederholfrequenz von 60 Hz entsteht.

Die zuvor genannte Aufgabe wird außerdem gelöst von einer vorgenannten 3D-Display-Anordnung mit einem LC-Panel, mit einer ersten LC-Optik, mit einer zweiten LC-Optik und mit einer Blickerfassungseinrichtung, wobei durch das LC-Panel Sichtstrahlen erzeugbar sind, wobei die das LC-Panel verlassenen Sichtstrahlen durch die erste LC-Optik und die zweite LC-Optik umlenkbar sind, wobei die Position des linken Auges und des rechten Auges eines Betrachters der 3D-Display-Anordnung durch die Blickerfassungseinrichtung verfolgbar sind, wobei der ersten LC-Optik mindestens eine erste Abbildungsfunktion zugeordnet ist, durch die Sichtstrahlen in den Bereich des linken Auges umlenkbar sind, wobei der zweiten LC-Optik mindestens eine zweite Abbildungsfunktion zugeordnet ist, durch die Sichtstrahlen in den Bereich des rechten Auges umlenkbar sind.

Bei einer ersten Ausgestaltung der erfindungsgemäßen 3D-Display-Anordnung ist vorgesehen, dass zwischen dem LC-Panel und der ersten LC-Optik ein Polarisations-Switch angeordnet ist, der dazu ausgestaltet ist, die Polarisation der Sichtstrahlen um 180° zu drehen.

Bei einer weiteren Ausgestaltung der 3D-Display-Anordnung ist die Blickerfassungseinrichtung in Form einer Eye-Tracking-Kamera ausgestaltet. Die Eye-Tracking-Kamera muss nicht unmittelbar an den übrigen Elementen der 3D-Display-Anordnung angeordnet sein. Wenn die 3D-Display-Anordnung beispielsweise in einem Fahrzeug, vorzugsweise einem Kraftfahrzeug, verwendet wird, kann die Eye-Tracking-Kamera beispielsweise an einem geeigneten Ort im Bereich des Cockpits angeordnet werden, so dass eine leichte Verfolgung der Augen, beispielsweise des Fahrers des Fahrzeugs, aber auch des Beifahrers, realisiert werden kann. Die von der Eye-Tracking-Kamera aufgenommenen Daten können kabelgebunden oder kabellos an eine Auswerteeinrichtung der 3D-Display-Anordnung gesendet werden, die auch die Auswertung und Anpassung der Abbildungsfunktionen steuert.

Vorteilhafterweise ist bei einer weiteren bevorzugten Ausgestaltung der 3D-Display-Anordnung vorgesehen, dass durch die 3D-Display-Anordnung ein erfindungsgemäßes Verfahren durchführbar ist. Die obigen Ausführungen zum erfindungsgemäßen Verfahren gelten entsprechend auch für die erfindungsgemäße 3D-Display-Anordnung.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung der Durchführung eines Ausführungsbeispiels eines erfindungsgemäßen Verfahrens beziehungsweise eine schematische Darstellung eines Ausführungsbeispiels einer erfindungsgemäßen 3D-Display-Anordnung,
- Figur 2: eine Anordnung von Flüssigkristallen,
- Figur 3: eine schematische Darstellung einer gezielten Ausrichtung von Flüssigkristallen,
- Figur 4: eine beispielhafte Elektrodenstruktur einer LC-Optik und
- Figur 5: eine schematische Darstellung des Aufbaus einer Abbildungsfunktion.

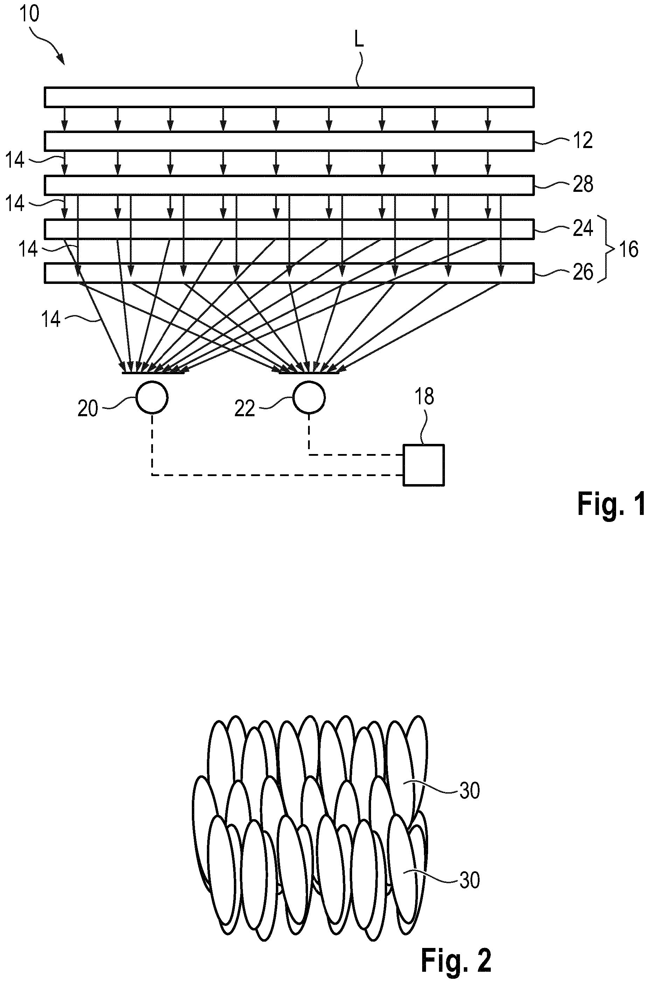

Figur 1 zeigt den Aufbau eines 3D-Displays 10 beziehungsweise einer 3D-Display-Anordnung. Das 3D-Display 10 umfasst ein LC-Panel 12, also ein Flüssigkristalldisplay. Das LC-Panel 12 sendet Sichtstrahlen 14 aus. Das LC-Panel 12 kann zusätzlich mittels einer geeigneten Beleuchtung L erhellt werden. In diesem Ausführungsbeispiel ist die Beleuchtung L ein horizontal kollimiertes Licht, das zusätzlich mit einer hier nicht dargestellten Linse ausgestaltet ist. Das kollimierte Licht wird mit der Linse im 3D-Display 10 so fokussiert, dass nur ein Bereich von 8 mm bis 16 mm vor dem 3D-Display 10 in einer Entfernung von 600 mm bis 1000 mm sichtbar wird. Die das LC-Panel 12 verlassenen Sichtstrahlen 14 weisen einen ersten Polarisationszustand auf. In diesem Ausführungsbeispiel handelt es sich bei dem ersten Polarisationszustand um eine P-Polarisation.

Die das LC-Panel 12 verlassenen Sichtstrahlen 14 treffen auf eine LC-Optik 16. Die LC-Optik 16 ist dazu ausgestaltet, Sichtstrahlen 14 nach Abhängigkeit einer Abbildungsfunktion, die unter anderem von den Daten einer Blickerfassungseinrichtung 18 abhängig ist, derart umzulenken, dass relevante Sichtstrahlen 14 in das linke Auge 20 beziehungsweise das rechte Auge 22 eines Betrachters des 3D-Displays 10 gelangen. Die LC-Optik 16 umfasst eine erste LC-Optik 24 und eine zweite LC-Optik 26. Die erste LC-Optik 24 ist dazu ausgelegt, Sichtstrahlen 14 mit einem ersten Polarisationszustand zu verarbeiten, während die zweite LC-Optik 26 dazu ausgelegt ist, Sichtstrahlen 14 mit einem zweiten Polarisationszustand zu verarbeiten.

Zwischen dem LC-Panel 12 und der LC-Optik 16 ist ein Polarisations-Switch 28 angeordnet. Der Polarisations-Switch 28 ist dazu ausgestaltet, die Sichtstrahlen 14 vom ersten Polarisationszustand (P-Polarisation) in den zweiten Polarisationszustand (S-Polarisation) beziehungsweise vom zweiten Polarisationszustand in den ersten Polarisationszustand zu überführen. Durch den Wechsel der zwei Polarisationszustände können Ansichten für das linke Auge 20 und das rechte Auge 22 unabhängig voneinander erstellt werden. Bei einer ausreichend hohen Bildwiederholfrequenz erhält der Betrachter somit einen dreidimensionalen Effekt. Bei diesem Ausführungsbeispiel ist die Bildwiederholfrequenz auf 120 Hz eingestellt. Der Polarisations-Switch 28 schaltet synchron zur Bildwiederholfrequenz des LC-Panels 12. Somit wird dem Betrachter insgesamt ein dreidimensionales Bild mit einer Bildwiederholfrequenz von 60 Hz dargestellt.

Die Abbildungsfunktion ist die Einstellung der LC-Optik 16, die benötigt wird, um die jeweiligen Sichtstrahlen 14 in die entsprechende horizontale Richtung des linken Auges 20 beziehungsweise des rechten Auges 22 des Betrachters zu lenken. Die Abbildungsfunktion ist entsprechend mit der Blickerfassungseinrichtung 18 verknüpft, so dass die relevanten Sichtstrahlen 14 zum Betrachter gelenkt werden können, wobei für den Fall irrelevante Ansichten außerhalb des Sichtbereichs des Anwenders nicht erzeugt werden müssen.

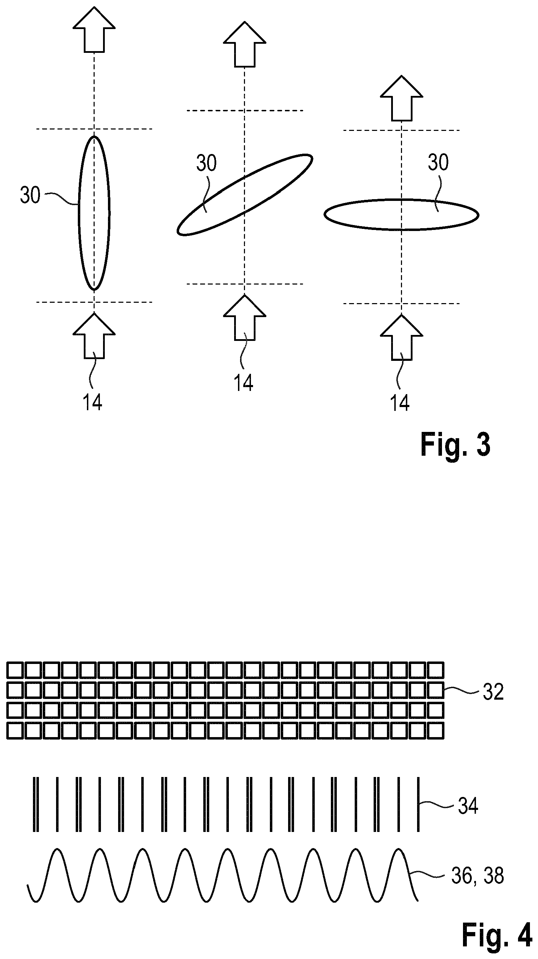

Die Figuren 2 und 3 zeigen eine Anordnung von Flüssigkristallen 30 beziehungsweise deren Orientierung bei einem angelegten elektrischen Feld. Flüssigkristalle 30 sind in der Lage, abhängig von dem angelegten elektrischen Feld ihren Brechungsindex zu ändern. Dies erfolgt, in dem Flüssigkristalle 30 ihre Orientierung zur optischen Achse verändern, wenn die Intensität des elektrischen Feldes verändert wird. Beim Ausschalten des elektrischen Feldes orientieren sich die Flüssigkristalle 30 in ihre ursprüngliche Position, in der der Lichtstrahl (fast) ohne Brechung das Element durchdringt. Dabei bestimmt die spannungslose Orientierung der Flüssigkristalle eine orientierungsvorgebende Schicht, eine Art Strukturschicht. Diese werden auf zwei Substrate, insbesondere Glas, aufgetragen, zwischen denen sich die Flüssigkristalle 30 befinden. Die hier nicht dargestellten Elektroden, die das elektrische Feld aufbauen, werden ebenfalls auf dem Substratglas aufgetragen und sind nahezu transparent. Beim Anlegen der Spannung können je nach Design der flüssigkristallbasierten LC-Optik 16 Veränderungen der Licht-Spot-Größe (Fokusänderung), symmetrische Spotausdehnungen in einer oder beiden Achsen, Verschiebungen des Lichtspots und/oder symmetrische Verwischung des Lichtspots hervorgerufen werden.

Figur 4 zeigt, wie die Elektrodenstrukturen und das elektrische Feld der LC-Optik 16 ausgestaltet werden und wie diese mit dem LC-Panel 12 kombiniert werden. Dieses Layout ermöglicht das Umsetzen einer aus dem Stand der Technik bekannten Lenticulare und gleichzeitig das Erzeugen einer Prismen/1D-Linsen-Funktion für die Lichtlenkung. Dargestellt ist die Pixelstruktur 32 des LC-Panels 12. Darunter ist schematisch die Elektrodenstruktur 34 der LC-Optik 16 angeordnet. Bei Verwendung einer Zylinderlinse ist das darunterliegende elektrische Feld 36 der LC-Optik 16 mit einer überlagerten Lenkungsfunktion 38 wie dargestellt ausgestaltet.

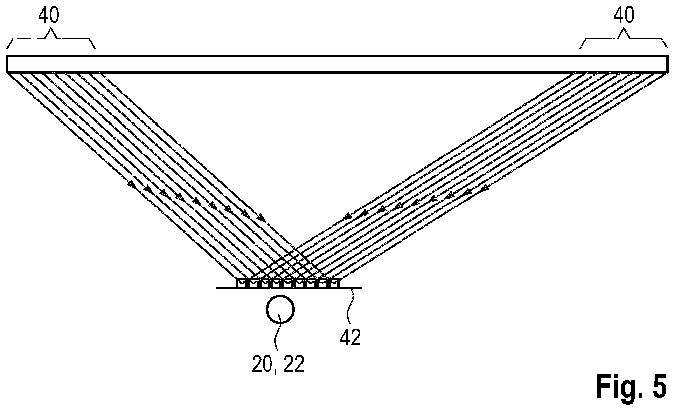

Figur 5 zeigt, wie eine Abbildungsfunktion aufgebaut sein kann. Ziel ist es, jeweils 8 bis 16 Subpixel 40, vorzugsweise 10 Subpixel 40, mit einer Linse auf eine Baseline 42 von 10 mm bis 30 mm abzubilden.

### Bezugszeichenliste

- 10: 3D-Display
- 12: LC-Panel
- 14: Sichtstrahl
- 16: LC-Optik
- 18: Blickerfassungseinrichtung
- 20: linkes Auge
- 22: rechtes Auge
- 24: erste LC-Optik
- 26: zweite LC-Optik
- 28: Polarisations-Switch
- 30: Flüssigkristall
- 32: Pixelstruktur
- 34: Elektrodenstruktur
- 36: elektrisches Feld
- 38: Lenkungsfunktion
- 40: Subpixel
- 42: Baseline
- L: Beleuchtung

## Patentansprüche

1. Verfahren zum Betreiben eines 3D-Displays (10), wobei mittels eines LC-Panels (12) Sichtstrahlen (14) erzeugt werden, wobei die Sichtstrahlen (14) von mindestens einer LC-Optik (16) umgelenkt werden können, **dadurch gekennzeichnet, dass** eine Blickerfassungseinrichtung (18) die Position des linken Auges (20) und des rechten Auges (22) eines Betrachters des 3D-Displays (10) verfolgt, dass der LC-Optik (16) mindestens eine erste, mit der Blickerfassungsvorrichtung verknüpfte, Abbildungsfunktion zugeordnet wird, durch die Sichtstrahlen (14) in den Bereich des linken Auges (20) gelenkt werden können, dass der LC-Optik (16) mindestens eine zweite, mit der Blickerfassungsvorrichtung verknüpfte, Abbildungsfunktion zugeordnet wird, durch die Sichtstrahlen (14) in den Bereich des rechten Auges (22) gelenkt werden können, und dass zwischen der ersten Abbildungsfunktion und der zweiten Abbildungsfunktion synchron zur Bildwiederholfrequenz des LC-Panels (12) gewechselt wird, wobei mindestens eine erste LC-Optik (24) und eine zweite LC-Optik (26) vorgesehen sind, und dass die erste Abbildungsfunktion der ersten LC-Optik (24) zugeordnet wird und dass die zweite Abbildungsfunktion der zweiten LC-Optik (26) zugeordnet wird, wobei die das LC-Panel (12) verlassenen Sichtstrahlen (14) einen ersten Polarisationszustand aufweisen, dass ein Polarisations-Switch (28) vorgesehen ist, durch den die Sichtstrahlen (14) vom ersten Polarisationszustand in einen zweiten Polarisationszustand und vom zweiten Polarisationszustand in den ersten Polarisationszustand überführt werden können und wobei die erste LC-Optik (24) für den ersten Polarisationszustand ausgelegt ist und dass die zweite LC-Optik (26) für den zweiten Polarisationszustand ausgelegt ist.

2. Verfahren nach Anspruch 1, **dadurch gekennzeichnet, dass** der erste Polarisationszustand einer P-Polarisation entspricht und dass der zweite Polarisationszustand einer S-Polarisation entspricht.

3. Verfahren nach einem der Ansprüche 1 oder 2, **dadurch gekennzeichnet, dass** das LC-Panel (12) mit einer Bildwiederholfrequenz von 120 Hz betrieben wird.

4. 3D-Display-Anordnung mit einem LC-Panel (12), mit einer ersten LC-Optik (24), mit einer zweiten LC-Optik (26) und mit einer Blickerfassungseinrichtung (18), wobei durch das LC-Panel (12) Sichtstrahlen (14) erzeugbar sind, wobei die das LC-Panel (12) verlassenen Sichtstrahlen (14) durch die erste LC-Optik (24) und die zweite LC-Optik (26) umlenkbar sind, wobei die Position des linken Auges (20) und des rechten Auges (22) eines Betrachters der 3D-Display-Anordnung durch die Blickerfassungseinrichtung (18) verfolgbar sind, wobei der ersten LC-Optik (24) mindestens eine erste, mit der Blickerfassungsvorrichtung verknüpfte, Abbildungsfunktion zugeordnet ist, durch die Sichtstrahlen (14) in den Bereich des linken Auges (20) umlenkbar sind, wobei der zweiten LC-Optik (26) mindestens eine zweite, mit der Blickerfassungsvorrichtung verknüpfte, Abbildungsfunktion zugeordnet ist, durch die Sichtstrahlen (14) in den Bereich des rechten Auges (22) umlenkbar sind, wobei durch die 3D-Display-Anordnung ein Verfahren nach einem der Ansprüche 1 bis 3 durchführbar ist.

5. 3D-Display-Anordnung nach Anspruch 4, **dadurch gekennzeichnet, dass** zwischen dem LC-Panel (12) und der ersten LC-Optik (24) ein Polarisations-Switch (28) angeordnet ist, der dazu ausgestaltet ist, die Polarisation der Sichtstrahlen (14) um 180° zu drehen.

6. 3D-Display-Anordnung nach Anspruch 4 oder 5, **dadurch gekennzeichnet, dass** die Blickerfassungseinrichtung (18) in Form einer Eye-Tracking-Kamera ausgestaltet ist.

## Claims

1. Method for operating a 3D display (10), wherein viewing rays (14) are generated by means of an LC panel (12), wherein the viewing rays (14) are able to be deflected by at least one LC optical system (16), **characterized in that** a gaze capture device (18) tracks the position of the left eye (20) and the right eye (22) of a viewer of the 3D display (10), **in that** the LC optical system (16) is assigned at least one first imaging function linked to the gaze capture device, by means of which imaging function viewing rays (14) can be directed into the region of the left eye (20), **in that** the LC optical system (16) is assigned at least one second imaging function linked to the gaze capture device, by means of which imaging function viewing rays (14) can be directed into the region of the right eye (22), and **in that** switching between the first imaging function and the second imaging function takes place synchronously with the vertical refresh rate of the LC panel (12), wherein at least one first LC optical system (24) and one second LC optical system (26) are provided, and **in that** the first imaging function is assigned to the first LC optical system (24) and **in that** the second imaging function is assigned to the second LC optical system (26), wherein the viewing rays (14) which leave the LC panel (12) have a first polarization state, **in that** a polarization switch (28) is provided, by means of which the viewing rays (14) can be converted from the first polarization state to a second polarization state and from the second polarization state to the first polarization state, and wherein the first LC optical system (24) is designed for the first polarization state and **in that** the second LC optical system (26) is designed for the second polarization state.

2. Method according to claim 1, **characterized in that** the first polarization state corresponds to a P-polarization and **in that** the second polarization state corresponds to an S-polarization.

3. Method according to any of claims 1 or 2, **characterized in that** the LC panel (12) is operated at a vertical refresh rate of 120 Hz.

4. 3D display arrangement comprising an LC panel (12), a first LC optical system (24), a second LC optical system (26) and a gaze capture device (18), wherein viewing rays (14) can be generated by the LC panel (12), wherein the viewing rays (14) leaving the LC panel (12) can be deflected by the first LC optical system (24) and the second LC optical system (26), wherein the position of the left eye (20) and the right eye (22) of a viewer of the 3D display arrangement can be tracked by the gaze capture device (18), wherein the first LC optical system (24) is assigned at least one first imaging function linked to the gaze capture device, by means of which imaging function viewing rays (14) can be deflected into the region of the left eye (20), wherein the second LC optical system (26) is assigned at least one second imaging function linked to the gaze capture device, by means of which imaging function viewing rays (14) can be deflected into the region of the right eye (22), wherein a method according to any of claims 1 to 3 can be carried out by means of the 3D display arrangement.

5. 3D display arrangement according to claim 4, **characterized in that** a polarization switch (28) is arranged between the LC panel (12) and the first LC optical system (24), which switch is configured to rotate the polarization of the viewing rays (14) by 180°.

6. 3D display arrangement according to claim 4 or 5, **characterized in that** the gaze capture device (18) is an eye-tracking camera.

## Revendications

1. Procédé d'exploitation d'un affichage 3D (10), dans lequel des rayons de visée (14) sont générés par le biais d'un panneau LC (12), dans lequel les rayons de visée (14) peuvent être déviés par au moins une optique LC (16),
**caractérisé en ce qu'**un dispositif de détection du regard (18) suit la position de l'œil gauche (20) et de l'œil droit (22) d'un observateur de l'affichage 3D (10), **en ce qu'**au moins une première fonction de représentation, associée au dispositif de détection du regard, est attribuée à l'optique LC (16), par laquelle les rayons de visée (14) peuvent être dirigés dans la zone de l'œil gauche (20), **en ce qu'**au moins une seconde fonction de représentation, associée au dispositif de détection du regard, est attribuée à l'optique LC (16), par laquelle les rayons de visée (14) peuvent être dirigés dans la zone de l'œil droit (22), et **en ce qu'**une alternance est effectuée entre la première fonction de représentation et la seconde fonction de représentation en synchronisme avec la fréquence de répétition des images du panneau LC (12), dans lequel au moins une première optique LC (24) et une seconde optique LC (26) sont prévues, et **en ce que** la première fonction de représentation est attribuée à la première optique LC (24) et **en ce que** la seconde fonction de représentation est attribuée à la seconde optique LC (26), dans lequel les rayons de visée (14) quittant le panneau LC (12) présentent un premier état de polarisation, **en ce qu'**il est prévu un commutateur de polarisation (28) par lequel les rayons de visée (14) peuvent être transférés du premier état de polarisation dans un second état de polarisation et du second état de polarisation dans le premier état de polarisation et dans lequel la première optique LC (24) est conçue pour le premier état de polarisation et **en ce que** la seconde optique LC (26) est conçue pour le second état de polarisation.

2. Procédé selon la revendication 1, **caractérisé en ce que** le premier état de polarisation correspond à une polarisation P et **en ce que** le second état de polarisation correspond à une polarisation S.

3. Procédé selon l'une des revendications 1 ou 2, **caractérisé en ce que** le panneau LC (12) est exploité avec une fréquence de répétition des images de 120 Hz.

4. Agencement d'affichage 3D comportant un panneau LC (12), comportant une première optique LC (24), comportant une seconde optique LC (26) et comportant un dispositif de détection du regard (18), dans lequel des rayons de visée (14) peuvent être générés par le panneau LC (12), dans lequel les rayons de visée (14) quittant le panneau LC (12) peuvent être déviés par la première optique LC (24) et la seconde optique LC (26), dans lequel la position de l'œil gauche (20) et de l'œil droit (22) d'un observateur de l'agencement d'affichage 3D peut être suivie par le dispositif de détection du regard (18), dans lequel au moins une première fonction de représentation associée au dispositif de détection du regard est attribuée à la première optique LC (24), fonction par laquelle les rayons de visée (14) peuvent être déviés dans la zone de l'œil gauche (20), dans lequel au moins une seconde fonction de représentation associée au dispositif de détection du regard est attribuée à la seconde optique LC (26), fonction par laquelle les rayons de visée (14) peuvent être déviés dans la zone de l'œil droit (22), dans lequel un procédé selon l'une des revendications 1 à 3 peut être mis en œuvre par l'agencement d'affichage 3D.

5. Agencement d'affichage 3D selon la revendication 4,
**caractérisé en ce qu'**entre le panneau LC (12) et la première optique LC (24) est agencé un commutateur de polarisation (28) qui est conçu pour faire tourner la polarisation des rayons de visée (14) de 180 °.

6. Agencement d'affichage 3D selon la revendication 4 ou 5,
**caractérisé en ce que** le dispositif de détection du regard (18) est conçu sous la forme d'une caméra de suivi oculaire.
